# FASCICULE DE BREVET EUROPEEN

(11) **EP 1 307 015 B1**
(45) Date de publication et mention de la délivrance du brevet: **02.11.2011**
(21) Numéro de dépôt: 02292235.5
(22) Date de dépôt: 12.09.2002
(51) Int. Cl.: H04L 12/56

(54) **Système de routage IS-IS tolérant aux fautes et procédé correspondant**
Fehlertolerantes System zur IS-IS Leitweglenkung und dazugehöriges Verfahren
Fault tolerant IS-IS routing system and method corresponding

(30) Priorité: 25.10.2001 FR 0113804
(43) Date de publication de la demande: 02.05.2003
(73) Titulaire: Alcatel Lucent, 75008 Paris (FR)
(72) Inventeur: Mongazon-Cazavet, Bruno, 91240 St. Michel-sur-Orge (FR); Rombeaut, Jean Pierre, 59600 Maubeuge (FR)
(74) Mandataire: Chaffraix, Sylvain

(56) Documents cités:
- US-A- 6 148 411
- AWEYA J: "On the design of IP routers Part 1: Router architectures" JOURNAL OF SYSTEMS ARCHITECTURE, ELSEVIER SCIENCE PUBLISHERS BV., AMSTERDAM, NL, vol. 46, no. 6, avril 2000 (2000-04), pages 483-511, XP004190486 ISSN: 1383-7621
- R CALLON: "Use of OSI IS-IS for routing in TCP/IP and Dual Environments" RFC 1195, décembre 1990 (1990-12), pages 1-84, XP002206496

## Description

L'invention porte sur le routage avec le protocole IS-IS dans les systèmes autonomes et plus particulièrement sur les routeurs IP.

Un tel protocole, utilisé pour le routage de paquets IP est décrit dans le document RFC 1195 "Use of IS-IS Routing in TCP/IP and Dual Environments".

Des routeurs, également dénommés systèmes intermédiaires « IS », sont connus, par exemple le routeur Alcatel 7670 RSP, qui présentent des discontinuités de fonctionnement dues à des périodes d'indisponibilité. Les périodes d'indisponibilité sont dues d'une part à des opérations planifiées, comme la maintenance du routeur, ou d'autre part à des évènements inattendus, comme les défaillances de routeur. Lorsque d'autres routeurs détectent un arrêt ou une défaillance d'un autre routeur, les données de routage vers le routeur indisponible sont invalidées. Lorsque le routeur est remis en service, toutes les données de routage sont perdues et doivent être à nouveau échangées avec les autres routeurs. Cela génère d'une part une hausse de trafic sur le réseau. Cela génère d'autre part des problèmes d'accessibilité sur le réseau. Les périodes d'indisponibilité du routeur incommodent ainsi les usagers du réseau.

Un projet d'extension du protocole IS-IS a été proposé à l'IETF sous les références « *Restart signaling for IS-IS* » pour permettre un redémarrage programmé d'un routeur en réduisant ces désagréments. Le protocole correspondant n'est cependant ni disponible, ni même expérimenté. Ce projet ne prévoit pas le cas des redémarrages non planifiés. Ce projet ne semble pas en l'état pouvoir accroître suffisamment la disponibilité du routeur. Ce projet impose également un changement des normes de protocole de IS-IS. Le changement des normes du protocole de routage IS-IS n'est pas envisageable à court terme car il imposerait la mise à jour ou le remplacement des routeurs actuels.
Il existe donc un besoin pour un routeur qui résout un ou plusieurs des inconvénients de l'état de la technique.

L'invention propose ainsi un procédé de commande d'un routeur dans un système autonome, mis en communication avec d'autres routeurs avec un protocole IS-IS via des interfaces, et présentant : un moteur protocolaire IS-IS actif ; un moteur protocolaire IS-IS de veille ; le procédé comprenant les étapes de : communication du routeur avec d'autres routeurs par l'intermédiaire du moteur protocolaire actif; stockage dans une mémoire du moteur protocolaire actif : de données concernant l'adjacence des autres routeurs; de données concernant l'état des liens avec les autres routeurs dans une mémoire du moteur protocolaire actif ; de données concernant les interfaces; mise à jour des données stockées dans une mémoire du moteur protocolaire de veille, à partir des données du routeur actif concernant l'adjacence, l'état des liens et les interfaces ; activation du moteur protocolaire de veille avec les données mises à jour, en utilisant le protocole IS-IS avec les autres routeurs.
Selon une variante, la mise à jour de l'ensemble des données est effectuée sur requête du moteur protocolaire de veille.
Selon encore une variante, le procédé comprend en outre une étape de détection de modification des données stockées dans une mémoire du moteur protocolaire actif, la mise à jour étant effectuée lorsqu'une modification de ces données a été détectée.
Selon une autre variante, la modification détectée est choisie dans le groupe constitué par l'activation d'adjacence, la désactivation d'adjacence, les modifications de données d'adjacence éventuellement suite à la réception d'un paquet de déclaration de présence, les modifications, effacements et créations concernant l'état des liens et des interfaces.
Selon encore une autre variante, l'étape d'activation du moteur protocolaire de veille comprend une étape de validation des données d'adjacence et d'état des liens préservés sans modification du protocole IS-IS.
On peut encore prévoir que le moteur protocolaire de veille effectue avant son activation une recherche de plus courts chemins à partir des données mises à jour.
Selon une variante, l'activation du moteur protocolaire de veille comprend une étape de vérification de validité de ses données d'adjacence.
Selon une autre variante, la vérification de validité comprend : l'envoi d'un paquet de données IIH PDU par le moteur protocolaire de veille vers un routeur adjacent contenant une requête d'envoi par le routeur adjacent d'un paquet de données CSNP ; la modification des données d'adjacence en fonction de la nature de la réponse du routeur adjacent.
L'invention a également pour objet un procédé de communication comprenant les étapes de : envoi d'un paquet de données IIH PDU par un premier routeur vers un deuxième routeur adjacent, le paquet comprenant un paramètre à un emplacement prédéterminé ; envoi d'un paquet de données CSNP par le deuxième routeur vers le premier routeur en fonction de la valeur dudit paramètre du paquet de données IIH PDU.
L'invention a encore pour objet un protocole de communication IS-IS, dans lequel un paquet de données IIH PDU comprend une requête d'envoi d'un paquet de données CSNP.

L'invention a en outre pour objet un routeur présentant plusieurs interfaces par lesquelles il est susceptible de communiquer avec d'autres routeurs avec un protocole IS-IS, comprenant : un moteur protocolaire IS-IS actif; un moteur protocolaire IS-IS de veille ; un canal de communication entre les moteurs protocolaires ; au moins une mémoire de stockage de données en communication avec le moteur protocolaire actif ; et au moins une mémoire de stockage de données en communication avec le moteur protocolaire de veille.

D'autres caractéristiques et avantages de l'invention apparaîtront à la lecture de la description qui suit de modes de réalisation de l'invention donnée à titre d'exemple et en référence aux dessins qui montrent :
- figure 1, une représentation schématique d'un routeur selon l'invention ;
- figure 2, un exemple de réseau de communication dans lequel un ou plusieurs routeurs de la figure 1 sont mis en oeuvre.

L'invention propose ainsi un procédé dans lequel des bases de données d'un moteur protocolaire IS-IS actif sont utilisées pour mettre à jour les bases de données d'un moteur protocolaire IS-IS de veille. Le moteur protocolaire actif utilise un protocole de routage IS-IS déterminé pour communiquer avec d'autres routeurs dans un système autonome ou AS. On désignera par système autonome ou AS une entité administrative de gestion autonome. Lorsque le moteur protocolaire actif devient indisponible, le moteur protocolaire de veille devient actif et communique avec d'autres routeurs en utilisant les bases de données mises à jour et le protocole de routage utilisé par le moteur protocolaire actif.

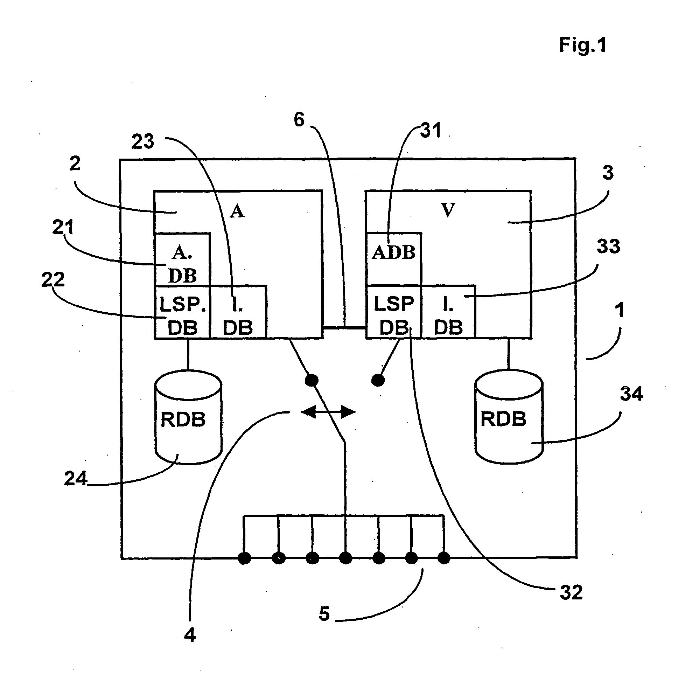

La figure 1 représente de façon schématique la structure d'un routeur 1 selon l'invention. Ce routeur 1 comprend un moteur protocolaire actif 2. Le routeur 1 comprend également un moteur protocolaire de veille 3, prévu pour prendre le relais du moteur protocolaire actif 2 en cas de défaillance de ce dernier. Ces moteurs protocolaires IS-IS sont définis dans la norme RFC 1142 de février 1990 et ISO 10589 version 2. Les moteurs protocolaires 2 et 3 sont raccordés par une liaison 6 qui forme un canal de communication entre eux. Un commutateur 4 permet de mettre en communication sélectivement le moteur protocolaire actif 2 ou le moteur protocolaire de veille 3 avec des interfaces d'entrée/sortie 5 du routeur. Bien que dans l'exemple représenté, les moteurs protocolaires 2 et 3 de communication soient formés de composants matériels différents, tels que des cartes raccordées ensemble par la liaison 6, on peut bien entendu également prévoir que les moteurs protocolaires soient formés de programmes exécutables fonctionnant en parallèle, de préférence sur des éléments matériels distincts susceptibles de communiquer ensemble.
Le moteur protocolaire actif 2 comprend ou est connecté à une mémoire de stockage, par exemple une mémoire cache. De façon similaire, le moteur protocolaire de veille 3 comprend ou est connecté à une mémoire de stockage, qui peut également être une mémoire cache.
Les mémoires des moteurs protocolaires permettent notamment de stocker des bases de données d'adjacences 21 et 31, des bases de données d'état des liens 22 et 32 et des bases de données d'état des interfaces 23 et 33.
De façon générale, le contenu des bases de données d'un moteur protocolaire est contenu dans les normes RFC 1142 et 1195.
Une base de données d'adjacences ou ADB contient notamment des descriptifs d'autres routeurs à moteur protocolaire IS-IS auxquels le routeur 1 est connecté.
Une base de données d'état des liens ou LSP DB, contient des données concernant l'état des liens de l'ensemble des réseaux et des routeurs du système autonome ou AS.
Une base de donnée d'état des interfaces contient par exemple des indicateurs d'état des interfaces, des informations sur les paramètres de l'interface ou encore sur la présence d'un routeur DIS connecté à une interface.
On peut également prévoir pour chaque moteur protocolaire une base de données contenant des temporisations.

Un procédé de fonctionnement du routeur peut être le suivant.
On peut prévoir dans un premier temps une étape de démarrage du moteur protocolaire de veille 3. Ce démarrage du moteur protocolaire de veille 3 est effectué par exemple lors de l'allumage du routeur. Lors de cette étape de démarrage, on inhibe par exemple les fonctions d'envois de paquets hello ou IIH par le moteur protocolaire de veille 3. Les paquets hello ou IIH sont des paquets de signalisation de présence envoyés en général à intervalles réguliers par un moteur protocolaire sur le réseau pour préciser la présence du routeur et des informations le concernant. Cette inhibition peut être réalisée par exemple en bloquant des temporisations correspondantes du moteur protocolaire de veille.
En parallèle, le moteur protocolaire actif 2 communique en utilisant le protocole IS-IS avec d'autres routeurs du système autonome ou AS. Lors de ses communications avec les autres routeurs, le moteur protocolaire actif récupère des données concernant les interfaces, les routeurs adjacents et l'état des liens. Le moteur protocolaire actif reçoit notamment des données IS-IS en provenance d'autres routeurs sous forme de paquets hello, sous forme de paquets LSP ou état des liens, sous forme de paquets CSNP c'est-à-dire une liste des LSP connus par un routeur, ou sous forme de PSNP. Le moteur protocolaire actif 2 stocke ces données dans sa mémoire respectivement dans les bases de données 23, 21 et 22.
Certaines bases de données du moteur protocolaire actif 2, notamment les bases de données d'interfaces, d'état des liens et d'adjacence, sont ensuite transmises en intégralité au moteur protocolaire de veille 3. On peut bien entendu envoyer les bases de données en intégralité de façon espacée dans le temps sous forme de paquets afin de ne pas gêner le fonctionnement du moteur protocolaire actif 2. On peut prévoir que le moteur protocolaire de veille 3 renvoie un accusé de réception au moteur protocolaire actif 2. Le moteur protocolaire actif 2 sait alors que la mise à jour des données du moteur protocolaire de veille 3 est effectuée.
Cette transmission peut soit s'effectuer sur initiative du moteur protocolaire actif 2, soit sur requête préalable du moteur protocolaire de veille. On peut ainsi prévoir que le moteur protocolaire de veille 3 effectue une demande de resynchronisation à laquelle le moteur protocolaire actif 2 répond par l'envoi des bases de données. Cette requête est par exemple envoyée à la fin du processus de démarrage du moteur protocolaire de veille 3.
Lors d'un démarrage du routeur, on crée par exemple une zone de mémoire locale dans le moteur protocolaire de veille pour stocker des bases de données concernant les adjacences, les états des liens et les interfaces. La mémoire permet la création, la modification et la suppression de données.
Les données reçues sont ensuite stockées dans les bases de données du moteur protocolaire de veille 3. Les bases de données d'interfaces, d'état des liens et d'adjacence du moteur protocolaire de veille 3 sont alors à jour pour permettre une activation éventuelle de ce moteur de veille lors d'une défaillance du moteur protocolaire actif 2. Le moteur protocolaire de veille 3 peut également se préparer pour recevoir et traiter des mises à jour ultérieures.

Selon une variante, le moteur protocolaire actif renvoie ultérieurement ses bases de données au moteur protocolaire de veille 3. On utilise de préférence une mise à jour incrémentielle des données du moteur protocolaire de veille 3, c'est-à-dire que seules les données modifiées depuis la dernière mise à jour sont envoyées au moteur protocolaire de veille 3.
On peut ainsi prévoir de détecter toute modification des données de la mémoire du moteur protocolaire actif. On peut alors effectuer la mise à jour des données dans le moteur protocolaire de veille 3 dès qu'une modification a été détectée. On peut notamment effectuer une mise à jour si on détecte une des modifications suivantes : l'activation d'adjacence, la désactivation d'adjacence, les modifications de données d'adjacence éventuellement suite à la réception d'un paquet de déclaration de présence, ou les modifications, effacements et créations concernant l'état des liens et des interfaces. Cette variante permet d'envoyer des mises à jour incrémentielles de données depuis le moteur protocolaire actif 2 vers le moteur protocolaire de veille. On peut ainsi réduire la quantité de données échangées entre les moteurs protocolaires. On évite ainsi que le moteur protocolaire actif 2 soit occupé excessivement à envoyer des données au détriment de tâches de routage. Une telle mise à jour garantit que la base de données du moteur protocolaire de veille 3 bénéficie d'une mise à jour récente lors d'une défaillance du moteur protocolaire actif 2.

On peut prévoir que le moteur protocolaire de veille 3 mette en oeuvre un processus de recherche de chemins les plus courts ou SPF à partir de ses bases de données mises à jour avant son activation.

On va maintenant décrire un exemple d'activation du moteur protocolaire de veille.
Suite à la ou les mises à jour, le moteur protocolaire de veille 3 dispose dans sa mémoire d'une des dernières images des bases de données d'adjacence, d'interface et d'état des liens du moteur protocolaire actif 2. Le moteur protocolaire de veille est ainsi prêt à prendre le relais du moteur protocolaire actif en cas d'interruption de fonctionnement de celui-ci. Le moteur protocolaire de veille peut ensuite fonctionner en moteur protocolaire actif en utilisant le protocole IS-IS utilisé initialement par le moteur protocolaire actif. L'activation du moteur protocolaire de veille va alors correspondre à un redémarrage à chaud du routeur avec des informations de routage opérationnelles.
Lorsque le moteur protocolaire de veille commute vers l'état actif, sa configuration peut être réinitialisée. Le moteur protocolaire de veille peut créer des interfaces, des adjacences et des états de liens préservés. Les interfaces, adjacences et états des liens préservés sont les adjacences dont l'état est considéré comme actif ou UP après la dernière mise à jour du moteur protocolaire de veille.
Lors de son activation, les inhibitions du moteur protocolaire de veille sont supprimées. Les temporisations d'envoi de données telles que les LSP et les paquets hello sont activées. Le moteur protocolaire de veille envoie alors des LSP vers d'autres routeurs. Le moteur protocolaire de veille effectue des vérifications sur la validité de ses bases de données. Il effectue notamment une vérification de la validité de sa base de données d'adjacences que l'on nommera test bidirectionnel ou « 2-way check ». Il effectue également une vérification de la validité de sa base de données de LSP.

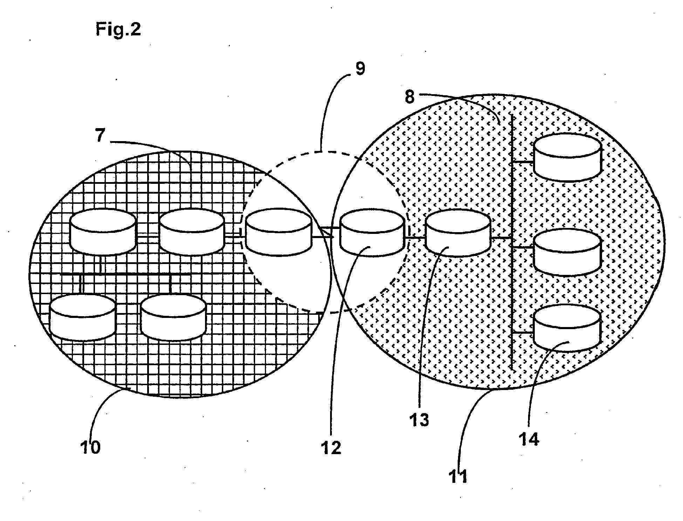

Pour l'étape de redémarrage d'une interface, on peut prévoir le déroulement suivant :
On recherche tout d'abord les adjacences UP qui sont reliées à l'interface donnée. Ces adjacences sont ensuite classées en fonction de leur niveau de rôle réseau. On désignera par exemple par adjacence de niveau 1, un routeur adjacent ayant uniquement un rôle de routage interne dans une zone ou « *area* » du système autonome ou AS. On désignera par adjacence de niveau 2, un routeur adjacent ayant un rôle de routage dans le backbone ou épine dorsale du système autonome AS. Le redémarrage des interfaces varie selon le type d'interfaces.
Dans l'exemple de la figure 2, la partie quadrillée correspond à une première zone ou « area » 7. La partie sur fond tacheté correspond à une deuxième zone ou « area » 8. La partie sur fond blanc correspond à l'épine dorsale ou backbone du système autonome AS. Les routeurs compris dans les contours en traits pleins 10 et 11, sont des routeurs de niveau 1. Les routeurs compris dans le contour en trait discontinu sont des routeurs de niveau 2.

On distingue alors deux types d'interfaces : une interface de connexion à un réseau LAN (broadcast ou Non-Broadcast-Multiple-Access), par exemple l'interface de connexion entre les routeurs 13 et 14, et une interface de connexion point à point (PTP), par exemple l'interface de connexion entre les routeurs 12 et 13.

### Interface LAN :

Si une adjacence de niveau 1 ou 2 est UP sur l'interface, un paquet de données (PDU) du type Hello IS-IS (IIH) pour réseau LAN est préparé. On intègre la liste de l'ensemble des adjacences UP de même niveau pour cette interface dans le champ TLV approprié de ce paquet de données IIH PDU. On ajoute également l'adresse locale de niveau liaison ou adresse MAC de chacune de ces adjacences dans le paquet IIH PDU. Le paquet IIH PDU est ensuite envoyé sur l'interface. Les adjacences ainsi traitées sont marquées à l'état « 2 way check » dans la base de données d'adjacence du routeur.

### Interface PTP :

Si une adjacence a été trouvée, quel que soit son niveau de rôle, l'adjacence est marquée à l'état « 2 way check » dans la base de données d'adjacence du routeur. Un paquet IIH PDU est mis en forme puis envoyé sur l'interface. L'adresse MAC de l'adjacence est incluse dans ce paquet IIH PDU. Si l'extension de protocole « 3-way handshake » est disponible, une option « Point-to-Point Adjacency State » peut être ajoutée au paquet IIH PDU. Cette option permet de récupérer les états vus par les adjacences dans le champ TLV du paquet IIH PDU. La valeur « Etat d'adjacence » de cette option doit alors mentionner un état UP. Si d'autres champs de l'option « Etat d'adjacence » sont supportés, par exemple le champ adresse MAC étendue, ils sont également utilisés dans le paquet IIH PDU envoyé.
A la suite du redémarrage d'une interface, toutes les adjacences correspondantes qui étaient à l'état UP lors de la défaillance sont placées à l'état « 2 way check ». L'état « 2 way check » n'est pas visible par d'autres routeurs. De plus, pour chaque interface possédant au moins une adjacence à l'état « 2 way check », une temporisation de redémarrage de l'interface est initialisée. La valeur de cette temporisation est égale à la valeur du « holding timer » de l'interface considérée.
Lorsqu'une adjacence est dans l'état « 2 way check », on prévoit le déroulement suivant selon le type d'adjacence.

### Adjacence PTP :

Si un paquet PDU de type groupe d'état des liens CSNP ou d'état des liens LSP est reçu, l'adjacence est marquée à l'état actif ou UP, et le paquet de données est traité comme cela est spécifié dans la norme du protocole IS-IS.
Si un paquet IIH PDU est reçu, on peut distinguer plusieurs cas :

### Le paquet IIH PDU présente un champ d'option d'état d'adjacence :

Si le champ d'option d'état d'adjacence indique UP ou actif, (et éventuellement si d'autres champs d'option d'état sont inclus dans le PDU et correspondent tous à l'état d'adjacence) l'adjacence est alors marquée à l'état synchroniser ou SYNC dans la base de données.
Si le champ d'option d'état d'adjacence n'indique pas UP ou actif, (ou éventuellement si d'autres champs d'option d'état sont inclus dans le PDU et ne correspondent pas tous à l'état d'adjacence) l'adjacence est alors marquée à l'état initialisation ou INITIALIZE dans la base de données.

### Le paquet IIH PDU ne comporte pas le champ d'option d'état d'adjacence :

Si en outre les champs d'identification de source et de circuit local du paquet PDU reçu correspondent à l'adjacence, l'adjacence est alors marquée à l'état synchronisation ou SYNC. Sinon, l'adjacence est marquée à l'état initialisation ou INITIALIZE dans la base de données.

### Adjacence LAN :

Si un paquet PDU de type CSNP est reçu, si ce paquet indique que le routeur 1 fait partie des adjacences du routeur émetteur, et si le routeur émetteur est marqué à l'état « 2 way check » dans la base de données du routeur 1, alors l'adjacence du routeur émetteur est marquée à l'état UP. Le paquet de données PDU reçu est ensuite traité comme spécifié dans la norme du protocole IS-IS.
Si un paquet PDU de type IIH est reçu, on examine la liste des adresses MAC contenues dans le champs d'option « routeurs adjacents » du paquet PDU. On recherche ensuite si l'adresse MAC du routeur 1 est présente dans la liste des adresses MAC examinées.
On examine également le champs LAN-ID du paquet PDU reçu pour déterminer si le routeur 1 sert de routeur désigné ou DIS de niveau 1 ou 2.
On recherche ensuite une adjacence dont l'adresse MAC correspond à l'adresse MAC de l'émetteur du paquet PDU.
Si cette adjacence est trouvée et qu'elle est marquée à l'état « 2 way check » :
- si l'adresse MAC du routeur 1 est présente dans la liste des adresses MAC du champ « routeurs adjacents » du paquet PDU reçu, l'état de l'adjacence est marqué en synchronisation ou SYNC.
- si l'adresse MAC du routeur 1 n'est pas dans la liste du champs « routeurs adjacents » du paquet PDU reçu, cette adjacence est effacée.

Si aucune adjacence n'est trouvée ou si elle n'est pas marquée à l'état « 2 way check », le paquet de donnée est traité comme un paquet de donnée normal provenant de cette adjacence.
Lorsqu'une adjacence est à l'état synchronisation ou SYNC, le routeur 1 est informé que la communication dans les deux sens avec le routeur adjacent correspondant est opérationnelle. Le routeur 1 ne sait par contre pas si les états de liens précédemment transmis par le routeur adjacent et stockés par le moteur protocolaire de veille sont actualisés. On va donc détailler une étape de synchronisation des adjacences concernant les états de liens.

### Synchronisation pour une adjacence PTP :

Si un paquet de données PDU de type CSNP est reçu et si l'adjacence correspondant au routeur émetteur est marquée à l'état synchronisation ou SYNC, le marquage de l'adjacence est alors mis à UP. Le paquet PDU reçu est ensuite traité comme défini dans la norme du protocole IS-IS.
Si un paquet PDU d'un autre type que le CSNP est reçu et si l'adjacence correspondante au routeur émetteur est marquée à l'état synchronisation ou SYNC, le marquage de l'adjacence est alors mis à UP. Le paquet PDU reçu est ensuite traité comme défini dans la norme du protocole IS-IS.

### Synchronisation pour une adjacence LAN :

Si un paquet de données PDU de type CSNP est reçu, si l'adjacence correspondant au routeur émetteur est marquée à l'état synchronisation ou SYNC, et si le routeur 1 n'est pas le DIS, alors l'adjacence est marquée à l'état UP. Le paquet PDU est alors traité comme défini dans la norme du protocole IS-IS.
Si un paquet de données PDU d'un type autre que CSNP est reçu depuis un routeur émetteur adjacent, l'adjacence reste marquée à l'état synchronisation ou SYNC. Le paquet PDU est alors traité comme défini dans la norme du protocole IS-IS.

On va maintenant décrire le comportement du moteur protocolaire activé 3, initialement en veille, lors de l'expiration d'une temporisation de redémarrage d'une interface.

### Expiration de temporisation pour une interface PTP :

On recherche dans un premier temps l'adjacence correspondant à l'interface dont la temporisation a expiré.
Si l'adjacence est marquée à l'état « 2 way check », on en déduit que le routeur correspondant à l'adjacence est devenu indisponible pendant la période entre la défaillance du moteur protocolaire actif et l'activation du moteur protocolaire de veille. L'adjacence correspondant à ce routeur est alors effacée.
Si l'adjacence est marquée à l'état synchronisation ou SYNC, on ne modifie pas l'état de cette adjacence. Un paquet PDU de type CSNP est envoyé. Ce paquet PDU CSNP comprend un LSP correspondant à l'adjacence dont le « checksum » a été volontairement modifié avec une valeur invalide (c'est-à-dire une valeur qui ne correspond pas à celle stockée dans la base d'états de liens du moteur activé 3, initialement en veille). Ainsi, le routeur adjacent concerné répond au paquet PDU CSNP en émettant vers le routeur 1 un LSP mis à jour pour remplacer le LSP volontairement invalidé, et d'autres LSP qui n'ont éventuellement pas été enregistrés avant l'activation du moteur protocolaire de veille.
Si l'adjacence reste à l'état synchronisation ou SYNC, on réinitialise la temporisation. On peut prévoir de décompter le nombre d'expirations de la temporisation. On efface alors l'adjacence si le nombre d'expirations de la temporisation atteint un seuil déterminé.
Pour d'autres marquages de l'état de l'adjacence, l'expiration de la temporisation est ignorée.
En répétant le processus pour les différentes interfaces, on obtient en fin d'activation, seulement des états d'adjacence UP dans la base de donnée du moteur protocolaire activé 3, initialement en veille. Ainsi, seules les adjacences actives restent indiquées dans la base de données.

### Expiration de temporisation pour une interface LAN :

On recherche dans un premier temps toutes les adjacences correspondant à l'interface dont la temporisation a expiré.
Si une adjacence est marquée à l'état «2 way check », on en déduit que le routeur correspondant à l'adjacence est devenu indisponible pendant la période entre la défaillance du moteur protocolaire actif et l'activation du moteur protocolaire de veille. L'adjacence correspondant à ce routeur est alors effacée.
Si une adjacence est marquée à l'état synchronisation ou SYNC, et si le routeur 1 est le routeur DIS, on marque l'état de cette adjacence à UP. Si cela n'a pas déjà été fait pour cette interface, un paquet PDU de type CSNP est envoyé. Ce paquet PDU CSNP inclut tous les états de liens de niveau identique à celui de l'adjacence de sa base de données.
Si une adjacence est marquée à l'état synchronisation ou SYNC, et si le routeur 1 n'est pas le routeur DIS, on ne modifie pas le marquage d'état de cette adjacence.
Si au moins une adjacence de l'interface reste à l'état synchronisation ou SYNC, on réinitialise la temporisation. On peut prévoir de décompter le nombre d'expirations de la temporisation. On efface alors les adjacences de l'interface si le nombre d'expirations de la temporisation atteint un seuil déterminé.
Pour d'autres marquages de l'état de l'adjacence, l'expiration de la temporisation est ignorée.
En répétant le processus pour les différentes interfaces, on obtient en fin d'activation, seulement des états d'adjacence UP dans la base de données du moteur protocolaire activé 3, initialement en veille. Ainsi, seules les adjacences actives restent indiquées dans la base de données.

On va maintenant décrire une extension possible du protocole IS-IS, facilitant l'étape d'activation du moteur protocolaire de veille. Il est proposé d'intégrer une nouvelle option de requête d'émission d'un CSNP, dans les paquets de données PDU IIH (IS-IS Hello). Un routeur émetteur compatible avec l'extension pourrait par exemple intégrer les champs suivants dans un IIH PDU :
Champ « Type de la requête CSNP » : On peut prévoir une valeur prédéterminée du champ pour laquelle un envoi de CSNP est requis par le destinataire dès que possible. Le routeur destinataire doit être marqué à l'état UP dans la base de données d'adjacence et le routeur émetteur ne doit pas être le routeur DIS dans le cas d'un sous-réseau de type LAN.
Si un routeur destinataire compatible avec l'extension de protocole IS-IS reçoit le paquet IIH-PDU, il effectue le traitement suivant :
   Si le paquet provient d'un sous-réseau de type LAN pour lequel le routeur destinataire sert de DIS, et si l'adjacence correspondant au routeur émetteur est à l'état UP, un paquet CSNP est renvoyé dès que possible par le destinataire.
   Si le paquet IIH-PDU provient d'un sous-réseau PTP, et si l'adjacence correspondant au routeur émetteur est à l'état UP, un paquet CSNP est renvoyé dès que possible par le destinataire.
   Dans les autres cas, le champ d'option est ignoré et le routeur destinataire n'émet pas de paquet CSNP. Comme on l'a vu précédemment, on peut effacer le marquage de l'état de l'adjacence lorsque aucun paquet de données n'a été renvoyé par cette adjacence après l'expiration répétée d'une temporisation.
Si un routeur destinataire non compatible avec l'extension de protocole reçoit le paquet IIH-PDU, le champ d'option est ignoré.
Dans tous ces cas, le reste du paquet IIH PDU est traité normalement par le routeur destinataire.
Globalement, le marquage de l'état d'adjacence est modifié en fonction de la nature de la réponse reçue depuis le routeur adjacent. On considère bien entendu l'absence de réponse du routeur adjacent comme une réponse d'une nature particulière.
Le procédé décrit permet de réduire l'indisponibilité du routeur et de rendre une défaillance d'un moteur protocolaire invisible par les autres routeurs. L'activation du moteur protocolaire de veille n'est ainsi pas détectée par les autres routeurs.
Les présents modes de réalisation et exemples doivent être considérés comme ayant été présentés à titre illustratif et non restrictif et l'invention n'est pas censée être limitée aux détails fournis ici mais peut être modifiée en restant dans le cadre de la portée des revendications annexées

## Revendications

1. Procédé de commande d'un routeur (1) dans un système autonome, mis en communication avec d'autres routeurs avec un protocole IS-IS via des interfaces (5), et présentant :
• un moteur protocolaire IS-IS actif (2);
• un moteur protocolaire IS-IS de veille (3) ;
le procédé comprenant les étapes de :
• communication du routeur (1) avec d'outres routeurs par l'intermédiaire du moteur protocolaire actif (2);
• stockage dans une mémoire (21, 22, 23) du moteur protocolaire actif :
- de données concernant l'adjacence des autres routeurs;
- de données concernant l'état des liens avec les autres routeurs dans une mémoire du moteur protocolaire actif ;
- de données concernant les interfaces;
• mise à jour des données stockées dans une mémoire du moteur protocolaire de veille (31, 32, 33), à partir des données du routeur actif concernant l'adjacence, l'état des liens et les interfaces ;
• activation du moteur protocolaire de veille (3) avec les données mises à jour, en utilisant le protocole IS-IS avec les autres routeurs.

2. Le procédé de la revendication 1, **caractérisé en ce que** la mise à jour de l'ensemble des données est effectuée sur requête du moteur protocolaire de veille.

3. Le procédé de l'une des revendications 1 à 2, **caractérisé en ce qu'**il comprend en outre une étape de détection de modification des données stockées dans une mémoire du moteur protocolaire actif, la mise à jour étant effectuée lorsqu'une modification de ces données a été détectée.

4. Le procédé de la revendication 3, **caractérisé en ce que** la modification détectée est choisie dans le groupe constitué par l'activation d'adjacence, la désactivation d'adjacence, les modifications de données d'adjacence éventuellement suite à la réception d'un paquet de déclaration de présence, les modifications, effacements et créations concernant l'état des liens et des interfaces.

5. Le procédé de l'une des revendications précédentes, **caractérisé en ce que** l'étape d'activation du moteur protocolaire de veille comprend une étape de validation des données d'adjacence et d'état des liens préservés sans modification du protocole IS-IS.

6. Le procédé de l'une des revendications précédentes, **caractérisé en ce que** le moteur protocolaire de veille effectue avant son activation une recherche de plus courts chemins à partir des données mises à jour.

7. Le procédé de l'une des revendications précédentes, **caractérisé en ce que** l'activation du moteur protocolaire de veille comprend une étape de vérification de validité de ses données d'adjacence.

8. Le procédé de la revendication 7, **caractérisé en ce que** la vérification de validité comprend :
• l'envoi d'un paquet de données IIH PDU par le moteur protocolaire de veille vers un routeur adjacent contenant une requête d'envoi par le routeur adjacent d'un paquet de données CSNP ;
• la modification des données d'adjacence en fonction de la nature de la réponse du routeur adjacent.

9. Routeur (1) présentant plusieurs interfaces (5) par lesquelles il est susceptible de communiquer avec d'autres routeurs avec un protocole IS-IS, **caractérisé en ce qu'**il comprend :
• un moteur protocolaire IS-IS actif (2);
• un moteur protocolaire IS-IS de veille (3),
• un canal de communication (6) entre les moteurs protocolaire (2, 3);
• au moins une mémoire de stockage de données (21, 22, 23) en communication avec le moteur protocolaire actif (2) pour stocker des données concernant l'adjacence des autres routeurs, des données concernant l'état des liens avec les autres routeurs dans une mémoire du moteur protocolaire actif et des données concernant les interfaces; et
• au moins une mémoire de stockage de données (31, 32, 33) en communication avec le moteur protocolaire de veille (3), contenant des données mises à jour à partir des données du routeur actif concernant l'adjacence, l'état des liens et les interfaces et
• des moyens pour activer ledit moteur protocolaire de veille (3) avec les données mises à jour, en utilisant le protocole IS-IS avec les autres routeurs.

## Claims

1. A method for controlling a router (1) in an autonomous system, put into communication with other routers with an IS-IS protocol via interfaces (5), and exhibiting:
• an active IS-IS protocol engine (2);
• a standby IS-IS protocol engine (3);
which method comprises the steps of:
• having the router (1) communicate with other routers by means of the active protocol engine (2);
• storing in a memory (21, 22, 23) of the active protocol engine:
- data relating to the adjacency of other routers;
- data relating to the state of the connections with other routers in a memory of the active protocol engine;
- data relating to the interfaces;
• updating the data stored within a memory of the standby protocol engine (31, 32; 33), based on data from the active router relating to the adjacency, the state of the connections, and the interfaces;
• activating the standby protocol engine (3) with the updated data, using the IS-IS protocol with the other routers.

2. The method of claim 1, **characterized in that** all the data is updated upon the request of the standby protocol engine

3. The method of one of the claims 1 to 2, **characterized in that** it further comprises a step of detecting a change in the data stored within a memory of the active protocol engine, the update being performed when a change in this data has been detected.

4. The method of claim 3, **characterized in that** the detected change is chosen from the group constituted by adjacency activation, adjacency deactivation, changes in adjacency data that potentially occur upon receiving a presence declaration packet, and changes, deletions, and creations relating to the state of the connections and of the interfaces.

5. The method of one of the preceding claims, **characterized in that** the step of activating the standby protocol engine comprises a step of validating the preserved adjacency data and connection state data without changing the IS-IS protocol.

6. The method of one of the preceding claims, **characterized in that** the standby protocol engine, before it is activated, performs a "shortest path first" search based on the updated data.

7. The method of one of the preceding claims, **characterized in that** activating the standby protocol engine comprises a step of verifying the validity of its adjacency data.

8. The method of claim 7, **characterized in that** verifying the validity comprises:
- having the standby protocol engine send an IIH PDU data packet to an adjacent router containing a request to have the adjacent router send a CSNP data packet;
- changing the adjacency data as a function of the nature of the response from the adjacent router.

9. A router (1) exhibiting multiple interfaces (5) through which it may communicate with other routers with an IS-IS protocol, **characterized in that** it comprises:
• an active IS-IS protocol engine (2);
• a standby IS-IS protocol engine (3);
• a communication channel (6) between protocol engines (2. 3);
• at least one data storage memory (21, 22, 23) communicating with the active protocol engine (2) to store data relating to adjacency with other routers, and data relating to the state of the connections with the other routers in a memory of the active protocol engine and data concerning the interfaces; and
• at least one data storage memory (31, 32, 33) communicating with the standby protocol engine (3), containing data updated based on the data from the active router relating to adjacency, the state of the connections, and the interfaces, and
• means for activating said standby protocol engine (3) with the updated data, using the IS-IS protocol with the other routers.

## Patentansprüche

1. Verfahren zur Steuerung eines Routers (1) in einem autonomen System, welcher mit anderen Routern mit einem IS-IS-Protokoll über Schnittstellen (5) verbunden ist und aufweist
• Eine aktive IS-IS-Protokollmaschine (2),
• eine Standby-IS-IS-Protokollmaschine (3):
wobei das Verfahren die folgenden Schritte umfasst:
• Kommunikation des Routers (1) mit anderen Routern über die aktive Protokollmaschine (2),
• Speicherung in einem Speicher (21, 22, 23) der aktiven Protokollmaschine:
- von Daten in Bezug auf die Adjazenz der anderen Router,
- von Daten in Bezug auf den Zustand der Links mit den anderen Routern in einem Speicher der aktiven Protokollmaschine;
- von Daten in Bezug auf die Schnittstellen;
• Aktualisierung der in einem Speicher der Standby-Protokollmaschine (31, 32, 33) gespeicherten Daten, ausgehend von den Daten des aktiven Routers in Bezug auf die Adjazenz, den Zustand der Links und die Schnittstellen;
• Aktivierung der Standby-Protokollmaschine (3) mit den aktualisierten Daten unter Verwendung des IS-IS-Protokolls mit den anderen Routern.

2. Verfahren nach Anspruch 1, **dadurch gekennzeichnet, dass** die Aktualisierung aller Daten auf Anforderung der Standby-Protökollmaschine erfolgt

3. Verfahren nach einem der Anspruche 1 bis 2, **dadurch gekennzeichnet, dass** es weiterhin einen Schritt des Erkennens von Änderungen der in einem Speicher der aktiven Protokollmaschine gespeicherten Daten umfasst, wobei die Aktualisierung erfolgt, wenn eine Änderung dieser Daten erkannt wurde.

4. Verfahren nach Anspruch 3, **dadurch gekennzeichnet, dass** die erkannte Änderung in der Gruppe bestehend aus der Adjazenz-Aktivierung, der Adjazenz-Deaktivierung, den Änderungen von Adjazenz-Daten, gegebenenfalls im Anschluss an den Empfang eines Präsenzerklärungspakets, den Änderungen, Loschungen und Erstellungen in Bezug auf den Zustand der Links und den Schnittstellen gewählt wird.

5. Verfahren nach einem der vorstehenden Ansprüche, **dadurch gekennzeichnet, dass** der Schritt des Aktivierens der Standby-Protokollmaschine einen Schritt der Validierung der Adjazenz-Daten und des Zustands der ohne Änderung des IS-IS-Protokolls erhaltenen Links umfasst.

6. Verfahren nach einem der vorstehenden Ansprüche, **dadurch gekennzeichnet, dass** die Standby-Protokollmaschine vor deren Aktivierung eine Suche der kürzesten Pfade ausgehend von den aktualisierten Daten durchführt.

7. Verfahren nach einem der vorstehenden Ansprüche, **dadurch gekennzeichnet, dass** die Aktivierung der Standby-Protokollmaschine einen Schritt der Überprüfung der Gültigkeit seiner Adjazenz-Daten umfasst.

8. Verfahren nach Anspruch 7. **dadurch gekennzeichnet, dass** die Gültigkeitsüberprüfung umfasst:
• Das Senden eines Pakets mit IIH-PDU-Daten von der Standby-Protokollmaschine an einen adjazenten Router, welches eine Anforderung für das Senden eines Pakets mit CSNP-Daten durch den adjazenten Router umfasst,
• das Ändern der Adjazenz-Daten gemäß der Natur der Antwort des benachbarten Routers.

9. Router (1) mit mehreren Schnittstellen (5), über welche er mit anderen Routern mit einem IS-IS-Protokoll kommunizieren kann, **dadurch gekennzeichnet, dass** er umfasst:
• Eine aktive IS-IS-Protokollmaschine (2);
• eine Standby-IS-IS-Protokollmaschine (3);
• einen Kommunikationskanal (6) zwischen den Protokollmaschinen (2. 3),
• mindestens eine Datenspeicher (21, 22, 23), welcher mit der aktiven Protokollmaschine (2) verbunden ist, zum Speichern von Daten in Bezug auf die Adjazenz der anderen Router, von Daten in Bezug auf den Zustand der Links mit den anderen Routern in einem Speicher der aktiven Protokollmaschine und von Daten in Bezug auf die Schnittstellen: und
• mindestens einen Datenspeicher (31, 32, 33), welcher mit der Standby-Protokollmaschine (3) verbunden ist und ausgehend von den Daten des aktiven Routers in Bezug auf die Adjazenz, den Zustand der Links und die Schnittstelle aktualisierte Daten enthält; und
• Mittel zum Aktivieren der besagten Standby-Protokollmaschine (3) mit den aktualisierten Daten unter Verwendung des IS-IS-Protokolls mit den anderen Routern
